# EUROPÄISCHE PATENTSCHRIFT

(11) **EP 4 103 995 B1**
(45) Veröffentlichungstag und Bekanntmachung des Hinweises auf die Patenterteilung: **08.10.2025**
(21) Anmeldenummer: 21705468.3
(22) Anmeldetag: 11.02.2021
(51) Int. Cl.: G02B 21/34, G01N 21/64, G01N 21/27

(54) **REFERENZPROBE FÜR EIN MIKROSKOP SOWIE VERFAHREN ZUR KALIBRIERUNG UND REFERENZIERUNG**
REFERENCE SAMPLE FOR A MICROSCOPE AND METHODS FOR CALIBRATION AND REFERENCING
ÉCHANTILLON DE RÉFÉRENCE POUR UN MICROSCOPE ET PROCÉDURES D'ÉTALONNAGE ET DE RÉFÉRENCEMENT

(30) Priorität: 13.02.2020 DE 102020201806
(43) Veröffentlichungstag der Anmeldung: 21.12.2022
(73) Patentinhaber: Carl Zeiss Microscopy GmbH, 07745 Jena (DE)
(72) Erfinder: DOERING, Volker, 07745 Jena (DE); SEHER, Andreas, 07745 Jena (DE)
(74) Vertreter: Meyer, Jork
(86) Internationale Anmeldenummer: PCT/EP2021/053342
(87) Internationale Veröffentlichungsnummer: WO 2021/160744

(56) Entgegenhaltungen:
- WO-A1-2006/007766
- WO-A1-2016/030401
- WO-A1-2017/109057
- DE-A1- 102014 205 660
- US-A1- 2019 033 166
- ANONYMOUS: "Nano statt Karat - Diamanten im Dienste der Wissenschaft", 25 February 2009 (2009-02-25), XP055965441, Retrieved from the Internet <URL:https://idw-online.de/de/news302569> [retrieved on 20220927]
- ROYON ARNAUD ET AL: "Quality Control of Fluorescence Imaging Systems : A new tool for performance assessment and monitoring", OPTIK & PHOTONIK, vol. 12, no. 2, 1 April 2017 (2017-04-01), pages 22 - 25, XP055801936, ISSN: 1863-1460, DOI: 10.1002/opph.201700005
- YIYU OU ET AL: "Donor-acceptor-pair emission characterization in N-B doped fluorescent SiC", OPTICAL MATERIALS EXPRESS, 1 December 2011 (2011-12-01), USA, pages 1439 - 1446, XP055039496, Retrieved from the Internet <URL:http://www.opticsinfobase.org/DirectPDFAccess/7A54F64F-FF31-EB85-17B9EA5D2A27D047_224122/ome-1-8-1439.pdf?da=1&id=224122&seq=0&mobile=no> [retrieved on 20120928], DOI: 10.1364/OME.1.001439
- YIYU OU ET AL: "Characterization of donor-acceptor-pair emission in fluorescent 6H-SiC", PHYSICA SCRIPTA, INSTITUTE OF PHYSICS PUBLISHING, GB, vol. T148, 15 March 2012 (2012-03-15), pages 1 - 3, XP002763596, ISSN: 0031-8949, DOI: 10.1088/0031-8949/2012/T148/014003

## Beschreibung

Die Erfindung betrifft eine Referenzprobe entsprechend des Oberbegriffs des unabhängigen Anspruchs 1 sowie Verwendungen der Referenzprobe.

Optische Abbildungssysteme, insbesondere hochauflösende Mikroskope, können unter Verwendung von Referenzproben kalibriert und/oder justiert werden. Derartige Referenzproben sind mit zweidimensionalen Strukturierungen in Form von Testmustern versehen, die in einem Trägermaterial der Referenzprobe erzeugt wurden oder auf das Trägermaterial aufgebracht sind. Diese Testmuster besitzen Teilstrukturen, deren Lokalisation auf der Referenzprobe, deren Abmessungen und Abstände voneinander, insbesondere deren laterale Abstände, vorab bekannt sind.

Beispielsweise sind Referenzproben in der Form eines auf dem Gebiet der Lichtmikroskopie üblichen Objektträgers oder einer Küvette bekannt. Diese bestehen aus Glas und weisen zweidimensionale Testmuster (Strukturierungen) auf, die zur Emission von Fluoreszenzstrahlung anregbar sind. Anhand der erfassten Fluoreszenzstrahlung der Testmuster kann beispielsweise das Auflösungsvermögen der verwendeten Konfiguration eines Mikroskops bewertet werden.

Die Anregung und Emission der Fluoreszenzstrahlung basieren auf Dotierungen des Glases insbesondere mit sogenannten Seltenen Erden. In dieser Weise erzeugte Fluoreszenzzentren werden durch Anregungsstrahlung und Umgebungsbedingungen bei Weitem nicht so schnell degeneriert wie Fluoreszenzmarker auf Basis von Proteinen oder anorganische Markermoleküle, allerdings zeigen auch die dotierten Gläser eine teils deutliche Abnahme der emittierten Intensitäten bei mehrfacher Anregung (z. B. Royon, A. und Converset, N., 2017: Quality Control of Fluorescence Imaging Systems - A new tool für performance assessment and monitoring; Optik & Photonik 2/2017: 22 - 25).

Eine mögliche Verwendung von Fehlstellen aufweisenden Diamanten als Referenzstrukturen ist allgemein beispielsweise in der Pressemitteilung des Max-Planck-Instituts für biophysikalische Chemie vom 25.02.2009 angesprochen (Anonymous: "Nano statt Karat - Diamanten im Dienste der Wissenschaft", Pressemitteilung des Max-Planck-Instituts für biophysikalische Chemie, 25.02.2009).

Die als Testmuster verwendeten Strukturierungen werden bislang unter Verwendung solcher technischer Verfahren in das Trägermaterial eingebracht, deren Auflösung dem Auflösungsvermögen der zu messenden, zu kalibrierenden beziehungsweise zu justierenden optischen Systeme, insbesondere Mikroskope, entsprechen. Eine messtechnische Ermittlung der Auflösung von hochauflösenden Mikroskopen ist daher mit den aus dem Stand der Technik bekannten Referenzproben nur sehr bedingt möglich.

Der Erfindung liegt daher die Aufgabe zugrunde eine Referenzprobe vorzuschlagen, die eine gegenüber dem Stand der Technik verbesserte Auflösungsmessung ermöglicht. Zusätzlich soll die Erfindung eine Möglichkeit schaffen, vergleichende Messungen an optischen Systemen und Abbildungssystemen, insbesondere Mikroskopen, zu ermöglichen, die nicht durch Degeneration der Intensität der Lumineszenz aus der Probe beeinflusst werden.

Die Aufgabe wird durch den Gegenstand der unabhängigen Ansprüche gelöst. Vorteilhafte Ausgestaltungen der Erfindung finden sich in den abhängigen Ansprüchen.

Die Referenzprobe dient der Vermessung, Kalibrierung und/oder der Justierung eines optischen Abbildungssystems wie einem Mikroskop, insbesondere eines hochauflösenden Mikroskops, und weist mindestens eine Trägerstruktur aus einem Trägermaterial auf, welches zumindest in Bereichen seiner Ausdehnung, also wenigstens bereichs- oder abschnittsweise, zur Lichtemission (Lumineszenz) anregbar ist. Das Trägermaterial weist zudem mindestens eine hinsichtlich ihrer Abmessungen und Form vorbestimmte zwei- und/oder dreidimensionale Strukturierung bestehend aus einer Anzahl von Teilstrukturen auf. Diese zwei- und/oder dreidimensionale Strukturierung bildet das Testmuster. Die Referenzprobe kann mehrere Strukturierungen besitzen, die zudem hinsichtlich ihrer Abmessungen und Gestaltung voneinander verschieden sein können. Die Strukturierungen werden nachfolgend auch als Testmuster bezeichnet.

Erfindungsgemäß besteht das Trägermaterial aus Diamant, der insbesondere technisch erzeugt sein kann. Eine weitere erfindungsgemäße Ausführung verwendet Siliziumcarbid (SiC) als Trägermaterial. Damit das Trägermaterial zu einer Emission von Licht anregbar ist, ist das Trägermaterial in den Bereichen oder um die Bereiche der Strukturierung dotiert.

Die Trägerstruktur erlaubt eine wiederholte Bereitstellung und Verwendung der Testmuster und beinhaltet beziehungsweise trägt die Strukturierung. Die Trägerstruktur kann beispielsweise auf einem in der Mikroskopie üblichen Objektträger aufgesetzt sein.

Die jeweilige Teilstruktur ist lateral und/oder axial als eine Fläche, als Punkte, als eine dreidimensionale Struktur und/oder als eine Kombination mindestens zweier Linienabschnitte ausgebildet. Dabei erstreckt sich eine laterale Teilstruktur auf oder unter einer Oberfläche der Referenzprobe und im Wesentlichen parallel zu dieser, während sich eine axiale Teilstruktur in einer z-Richtung oder schräg zu dieser in das Trägermaterial hinein erstreckt. Die axialen Teilstrukturen umfassen erfindungsgemäß wenigstens ein Paar sich kreuzender Linien.

Als hochauflösend wird ein optisches Abbildungssystem, beispielsweise ein Mikroskop, bezeichnet, wenn mit diesem Strukturen dargestellt werden können, die kleiner als das Abbe-Limit sind. Nachfolgend wird die Erfindung beispielhaft anhand eines beziehungsweise mehrerer Mikroskope erläutert.

Eine Anregung zur Emission von Lumineszenz erfolgt insbesondere mittels einer Anregungsstrahlung geeigneter Wellenlänge und Intensität.

In einer vorteilhaften Ausführung der Referenzprobe ist das Trägermaterial mit Stickstoff-Leerstellen-Paaren (nitrogen - vacancy-pair) dotiert. Beispielsweise ist ein auch als NV-Diamant (nitrogen vacancies-diamond) bezeichnetes Trägermaterial mit Laserstrahlung mit Wellenlängen im sichtbaren Bereich anregbar und emittiert ebenfalls im sichtbaren Wellenlängenbereich (siehe z. B. Weil, T. 2017: Nanodiamanten mit Gitterdefekten als innovative Materialien für biomedizinische Anwendungen; Forschungsbericht 2017 - Max-Planck-Institut für Polymerforschung).

In weiteren Ausführungen der erfindungsgemäßen Referenzprobe ist das Trägermaterial wenigstens in Bereichen mit Silizium-Leerstellen-Paaren (SiV-Zentren), Phosphor-, Sauerstoff-, Schwefel-, Zinn- und/oder Mangan-Leerstellen-Paaren dotiert.

Die Referenzprobe kann eine Strukturierung oder mehrere Strukturierungen aufweisen. Diese werden jeweils aus mindestens einer Teilstruktur gebildet, die unterschiedlich ausgestaltet sein können, um verschiedene Messungen zu ermöglichen beziehungsweise um für unterschiedliche optische Systeme, insbesondere unterschiedliche Mikroskope oder Kameras, verwendbar zu sein.

Die Strukturierungen werden beispielsweise mittels eines lithographischen Verfahrens in das Trägermaterial der Trägerstruktur eingebracht. Die Herstellung solcher Strukturierungen ist beispielsweise bei Michl et al. beschrieben (Michl, J. et al.: A Diamond Nanoscale Reference for Super-Resolution Microscopy, unpubl., zur Publikation bei einer Fachzeitschrift eingereicht).

Die lateralen Teilstrukturen einer Strukturierung können nebeneinander angeordnete Paare von Linienabschnitten (Linienpaare) mit einem jeweiligen Abstand zwischen den Linienabschnitten sein. Eine solche Ausführung der Strukturierung ermöglicht in Abhängigkeit von dem gewählten Abstand der Linienabschnitte die Feststellung, ob die Linienabschnitte der jeweiligen Teilstrukturen optisch aufgelöst werden können. Je nach Ausdehnung der Strukturierung kann außerdem überprüft werden, ob ein Auflösungsvermögen lediglich über Bereiche oder über das gesamte Sichtfeld vorliegt. Beispielsweise kann mittels einer entsprechend dimensionierten, also eine entsprechend hohe Anzahl von Teilstrukturen umfassenden, Strukturierung geprüft werden, ob das Auflösungsvermögen beispielsweise in einem zentralen Bereich des Sichtfelds ebenso vorliegt wie in einem eher peripheren Bereich. Die Ausdehnung des Bereichs einer fehlerfreien Abbildung, beispielsweise ohne Verzerrungen und/oder ohne Verluste in der erreichbaren Auflösung, kann zur Bestimmung der jeweils nutzbaren Bildfeldgröße genutzt werden.

Um effektiv die Grenze des Auflösungsvermögens aufzufinden ist es vorteilhaft, wenn sich auf einer Referenzprobe mehrere Strukturierungen befinden, deren Teilstrukturen beziehungsweise deren Linienabschnitte jeweils unterschiedlich weit voneinander entfernt sind. Beispielsweise kann mindestens eine Strukturierung vorhanden sein, innerhalb der sich der Abstand der Linienabschnitte der Teilstrukturen von Paar zu Paar schrittweise verändert. So können beispielsweise die Abstände der Linienabschnitte aus einem Bereich von 25 nm bis 500 nm ausgewählt sein und beispielsweise 25, 50, 75, 100, 125, 150, 200, 250, 300, 400 und/oder 500 nm betragen.

Bei Verwendung moderner Techniken der Mikrostrukturierung können laterale Auflösungen und Positioniergenauigkeiten von 5 nm erreicht werden. Dabei beträgt beispielsweise die Varianz der Abstände der Linienabschnitte der jeweiligen Paare weniger als 2% oder weniger als 2 nm, je nachdem welcher Wert größer ist. Die Breite von Linien der Teilstrukturen beträgt vorteilhafterweise nicht mehr als 50 nm, vorzugsweise nicht mehr als 20 nm, ihre Länge beträgt beispielsweise 10 µm. Die einzelnen Paare von Linienabschnitten sind mit einem konstanten Pitch von beispielsweise 10 µm voneinander beabstandet.

Diese Ausführung ist für den Vergleich der Messmittel beziehungsweise optischen Systeme und die Bestimmung der Auflösungsfähigkeit von großem Vorteil, da die Strukturgröße großen Einfluss auf die wahrgenommene oder ermittelte Auflösungsfähigkeit hat, wenn sie gleich groß oder wenig kleiner als die zu ermittelnde Größe ist. Auch die Abweichungen von der gewünschten Strukturform / -größe unterliegen dieser Beschränkung.

Die Teilstrukturen, insbesondere in ihrer Ausführung als Paare von Linienabschnitten, können zueinander parallel angeordnet sein. Dabei können sie gegenüber einer (virtuellen) Bezugslinie senkrecht oder um einen bestimmten Winkel, beispielsweise 30°, 45° oder 90°, geneigt sein. Die Teilstrukturen können in weiteren Ausführungen auch nebeneinander in Linien oder Zeilen angeordnet sein.

In einer weiteren möglichen Ausführung sind die Teilstrukturen beispielsweise als Linienabschnitte ausgebildet, die zueinander parallel und in einer Richtung mit zunehmenden Abständen abgeordnet sind. Eine weiterführende Ausführung ist beispielsweise ein zweidimensionales Gitter, dessen Gitterlinien zueinander parallel und in mindestens einer Richtung mit zunehmenden Abständen abgeordnet sind.

Mit derartig gestalteten Referenzproben können zusätzlich oder alternativ zur Ermittlung der Bildfeldgröße beispielsweise die jeweilige optische Übertragungsfunktion (optical transfer function, OTF), die Modulations-Transferfunktion (modulation transfer function, MTF), sowie die Punktbildübertragungsfunktion (point spread function, PSF) analysiert werden. Dabei wird durch die MTF der Kontrast aller Ortsfrequenzen eines Systems, beispielsweise die Anzahl von Linienabschnitten je Längeneinheit (z. B. je Millimeter) beschrieben. Die PSF gibt die Abbildungsfunktion eines Bildpunkts an. Wird die PSF einer Fouriertransformation unterzogen, erhält man die OTF. Letztere enthält neben der MTF zusätzlich Informationen zur sogenannten PTF (Phasentransferfunktion; phase transfer function). im Sinne des Zusammenhangs OTF = MTF*e^(i*PTF). Der Zusammenhang lässt sich alternativ auch als 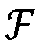 {*S*(*z*)} *=* 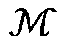 (*k_{z}*)*e*^{*iΦ*(*k*_{z})} mit 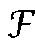 {*S*(*z*)} als optical transfer function, 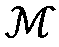 (*k_{z}*) als modulation transfer function und *e*^{*iΦ*(*k*_{z})} als phase transfer function darstellen (siehe z.B. Hecht, E. (1987): Optics; 508 ff; ISBN: 0-201-11611-1).

In der praktischen Umsetzung heißt das, dass die MTF mithilfe einer Teilstruktur in Form von Linienabschnitten direkt gemessen werden kann. Die OTF hängt maßgeblich von der PSF des Systems ab. Die PSF kann anhand unterschiedlicher Teilstrukturen ermittelt werden. Beispielsweise können dazu kleine punktförmige Teilstrukturen genutzt werden, die beispielsweise etwa ein Zehntel bis ein Fünftel der minimal auflösbaren Strukturgröße eines optischen Systems betragen.

Derartige Messungen sind alle nicht nur für hochauflösende optische Systeme relevant, sondern können ebenso für optische Systeme unterschiedlichen Auflösungsvermögens genutzt werden. Vorteilhaft ist dabei die mögliche Vergleichbarkeit und sehr gute Kalibrierbarkeit der Systeme, die sich insbesondere auf die Robustheit der Referenzprobe gegen unerwünschtes Bleichen gründet.

Von Vorteil ist, dass nicht nur ein Teil der Abbildungen bewertet wird, sondern das optische System als Ganzes in einem Aufnahmezustand beziehungsweise in einem Konfigurationszustand für die eigentliche Nutzung zur Fluoreszenzbildaufnahme vermessen werden kann. Im Gegensatz zum Stand der Technik entfallen mit der erfindungsgemäßen Referenzprobe die getrennten Aufnahmen von Beleuchtungs- und Detektionsstrahlengängen und es kann ein direkter und einfach nachvollziehbarer Nachweis der Auflösungsfähigkeit eines Systems erbracht werden.

Die lateralen Teilstrukturen einer jeweiligen Strukturierung können in weiteren Ausführungen der Erfindung als zur Emission von Lumineszenz anregbare Flächen ausgebildet sein. Beispielsweise können derartige Flächen in einem Raster angeordnet sein. Dabei weisen die einzelnen Flächen des Rasters vorteilhaft vorbestimmte Größen, Formen und Abstände zueinander auf. Mittels eines solchen Rasters können zum Beispiel auftretende Verzeichnungen erkannt werden, die sich beispielsweise in geschwungen abgebildeten Umrissen des Rasters darstellen, obwohl das Raster auf der Referenzprobe gerade Umrisse und rechte Winkel aufweist. Die Raster besitzen beispielsweise Abmessungen von 250x250 µm, 1x1 mm oder 6x6 mm. Die Pitches zwischen den Flächen betragen zum Beispiel 2 µm, 10 µm beziehungsweise 25 µm. Sind die Flächen als Kreisflächen ("Punkte") ausgebildet, betragen diese beispielsweise 100 nm, 250 nm beziehungsweise 500 nm im Durchmesser. Sind die Flächen als Rechtecke ausgebildet, betragen deren Kantenlängen beispielsweise 100 nm, 250 nm beziehungsweise 500 nm. Weitere möglichen Ausführungen sind beispielsweise Kreuze, Linien oder ähnliche Formen. Die Dicke der Teilstrukturen in z-Richtung ist vorteilhaft gleich oder kleiner 50 nm, vorzugsweise gleich oder kleiner 25 nm.

Die erfindungsgemäße Referenzprobe kann in weiteren Ausführungen eine maschinenlesbare Kodierung als eine Strukturierung aufweisen. Solche Kodierungen können zweidimensionale oder dreidimensionale Kodierungen sein und beispielsweise in Form sogenannter QR-Codes, Strichkodierungen (Barcodes) oder individuell definierter Form- und/oder Farbkombinationen ausgebildet sein.

In einer möglichen Ausführungsform der Referenzprobe weist die Strukturierung in einem zentralen Bereich Teilstrukturen einer ersten lateralen Ausdehnung, beispielsweise eines ersten Durchmessers, eines ersten Umfangs oder einer ersten Kantenlänge und in einem peripheren Bereich Teilstrukturen einer zweiten lateralen Ausdehnung, beispielsweise eines zweiten Durchmessers, eines zweiten Umfangs oder einer zweiten Kantenlänge auf.

Die flächigen Teilstrukturen können in weiteren Ausführungen der Erfindung beispielsweise als Teile eines sogenannten Siemenssterns ausgebildet sein. Dabei sind die als Kreissektoren gestaltete flächigen Teilstrukturen alternierend mit Kreissektoren angeordnet, die nicht zur Emission von Lumineszenz anregbar sind. Die Anzahl der Strahlen des Siemenssterns beträgt beispielsweise n = 16 bei einem Durchmesser von beispielsweise 20 µm. Eine derartige Ausführung ermöglicht eine qualitative Messung der Auflösung sowie einen Vergleich unterschiedlicher Mikroskope.

Um eine Auflösung eines jeweiligen Mikroskops in Richtung dessen optischer Achse (z-Richtung) ermitteln zu können, ist die Referenzprobe erfindungsgemäß mit einer axialen Teilstruktur versehen. Diese umfasst in einer vorteilhaften Ausführung wenigstens ein Paar sich in einem Punkt schneidender Linien. Die Linien verlaufen schräg zur z-Richtung im Trägermaterial. Die genaue Lage des Kreuzungspunkts sowie die Lagen und Verläufe, insbesondere die Längen, Winkel und Dicken bzw. Breiten der Linien im Trägermaterial sind bekannt.

Eine derartige Ausführung einer Strukturierung mit axialen Teilstrukturen erlaubt das Ermitteln der axialen Auflösung des Mikroskops. Außerdem kann eine Abweichung einer momentanen Ausrichtung der optischen Achse des Mikroskops relativ zum Kreuzungspunkt ermittelt werden. Dazu wird das Mikroskop beziehungsweise dessen entsprechende optische Elemente in z-Richtung fokussiert. Der Fokus wird in z-Richtung verschoben und die dabei bewirkte Emissionsstrahlung detektiert. Befindet sich der Kreuzungspunkt genau auf der optischen Achse, so wird nur ein einziges Mal Lumineszenz erfasst, wenn der Fokus in den Kreuzungspunkt gerichtet ist und dort Lumineszenz angeregt wird. Befindet sich die Bahn, entlang derer der Fokus in z-Richtung verschoben wird, abseits des Kreuzungspunktes, wird jeweils dann Lumineszenz angeregt, wenn der Fokus in eine der Linien gerichtet ist. Aus der Lage der Ursprungsorte der jeweiligen Lumineszenz (= aktuelle Fokuslage), der Dicke der Linien sowie aus dem Abstand zwischen den beiden Ursprungsorten kann auf die relative Lagebeziehung der Referenzprobe und der optischen Achse geschlossen werden.

Außerdem erlaubt eine solche axiale Teilstruktur eine Vermessung der axialen Auflösung. Dazu wird die Referenzprobe relativ zur optischen Achse verschoben, insbesondere entlang einer X-Y-Ebene und damit orthogonal zur in z-Richtung verlaufenden optischen Achse. Da die Lagen und Verläufe der Linien bekannt sind kann beispielsweise ausgehend von dem Kreuzungspunkt diejenige (Grenz-)Position gesucht werden, an der die optische Achse beide Linien schneidet und beide Linien aufgrund der von ihnen jeweils emittierten Fluoreszenzstrahlung noch voneinander unterschieden werden können. Zu berücksichtigen sind dabei auch die Dicken der Linien. Anhand der Distanz der so aufgefundenen Grenzposition vom Kreuzungspunkt und mit dem Wissen um die Lagen und Verläufe der Linien kann der Abstand der Linien zueinander an der Grenzposition ermittelt werden. Dieser Abstand gibt die erreichbare axiale Auflösung des betreffenden Mikroskops wieder.

In einer weiteren Ausführung der erfindungsgemäßen Referenzprobe sind einander kreuzende Linien als laterale Teilstrukturen ausgeführt. Die Linien verlaufen parallel zu einer Oberfläche des Trägermaterials, insbesondere in einer X-Y-Ebene der Referenzprobe. Auch hier kann anhand der ermittelten Grenzposition das Auflösungsvermögen, diesmal in lateraler Richtung, ermittelt werden. Das Auflösungsvermögen kann beispielsweise anhand der bekannten Positionen von Kreuzungspunkt und Grenzposition sowie der Verläufe der Linien berechnet werden. Möglich ist auch die Nutzung einer vorab angefertigten Look-Up-Tabelle (LUT) für die laterale beziehungsweise axiale Auflösung.

In einer weiteren Ausführung der erfindungsgemäßen Referenzprobe verläuft mindestens eine Linie ebenfalls schräg in dem Trägermaterial, die Linien schneiden sich jedoch in einem Punkt außerhalb wenigstens eines der Mittelpunkte der Linien. Es ist ebenfalls möglich, dass die mindestens eine schräg verlaufende Linie die mindestens eine andere Linie nicht schneidet und sich dieser lediglich annähert. Sind die Abstände der Linien an den unterschiedlichen Positionen der Strukturierung bekannt, können diese wie oben beschrieben zur Ermittlung des Auflösungsvermögens verwendet werden.

In weiteren Ausführungen umfasst eine Strukturierung axiale Teilstrukturen in Form von Flächen beziehungsweise Quadern. Deren Kantenlängen betragen beispielsweise 100 nm, 250 nm oder 500 nm. In einer alternativen Ausführung ist die Strukturierung als eine Fläche ausgeführt, die beispielsweise eine Größe von 5x5 mm aufweist und etwa 25 nm, vorteilhaft aber 10 nm unter der Oberfläche des Trägermaterials erzeugt ist. Die Varianz der Tiefe der Fläche gegenüber der Oberfläche beträgt vorzugsweise 5 nm oder weniger.

Sind als axiale Teilstrukturen Kugeln ausgebildet, so können diese beispielsweise Durchmesser von 25, 50, 75, 100, 125, 150, 175, 200, 250, 300, 400, 500, 600, 700, 800, 1000 oder 1400 nm aufweisen. Die Kugeln können in Rastern (Arrays) angeordnet sein. Ein solches Raster ist beispielsweise 10x10 µm groß.

Sind die Kugeln zueinander linear oder in Rastern, beispielsweise in einem 4x4-Raster, angeordnet, betragen die Abstände der Kugeln beispielsweise 25, 50, 75, 100, 125, 150, 175, 200, 250, 300, 400, 500, 600, 700, 800, 1000 und/oder 1400 nm. Für alle Ausführungsformen der Kugeln beziehungsweise Flächen oder Quader gilt, dass deren Abmaße innerhalb eines Arrays oder einer Zeile in weiteren Ausführungsformen unterschiedlich sein können. Beispielsweise nehmen die Abmaße in einer Richtung zu.

Die Ausführung der Teilstrukturen in Form wenigstens einer Kugel erlaubt die Messung einer Punktbildübertragungsfunktion (point spread function; PSF) des optischen Abbildungssystems. Die PSF kann für eine Kalibrierung des optischen Abbildungssystems herangezogen werden. Flächige und/oder in Rastern angeordnete Teilstrukturen erlauben, je nach Ausgestaltung, neben der Messung einer lateralen und/oder axialen Auflösung auch eine Bestimmung weiterer optischer Effekte, wie zum Beispiel der Vignettierung ("shading"). Dabei wird zum Beispiel bei gleicher Beleuchtungsstärke eine detektierte Intensität am Rande des Sichtfeldes relativ zum Zentrum des Sichtfeldes ermittelt.

In einer weiteren möglichen Ausführungsform der Referenzprobe sind als Strukturierung flächig Leerstellen-Paare erzeugt. Innerhalb dieser zur Emission von Lumineszenzstrahlung anregbaren Fläche sind Bereiche in Form beispielsweise von Kreisflächen, Dreiecken, Rechtecken, Vielecken und/oder sonstigen Formen vorhanden, an denen keine Leerstellen-Paare erzeugt sind. Diese nichtanregbaren Bereiche können rasterförmig angeordnet sein. Im Ergebnis ist das Testmuster somit zumindest über einen Bereich des Sichtfeldes als eine zur Emission von Lumineszenzstrahlung anregbare Matrix mit darin vorhandenen nicht anregbaren Bereichen ausgestaltet. Bei Verwendung einer Referenzprobe mit einem solchen Testmuster werden die nicht anregbaren Bereichen innerhalb der anregbaren Matrix detektiert und das Auflösungsvermögen ermittelt.

Die erfindungsgemäße Referenzprobe kann zur Kalibrierung eines hochauflösenden Mikroskops verwendet werden. Ein entsprechend ausgestaltetes Verfahren umfasst den Schritt des Bereitstellens der Referenzprobe im Strahlengang des zu kalibrierenden Mikroskops, wobei mindestens eine Teilstruktur einer ausgewählten Strukturierung der Referenzprobe in ein Objektfeld (Sichtfeld, field of view; FoV) des Mikroskops gebracht wird. Es werden Bilddaten der mindestens einen Teilstruktur mittels des Mikroskops erfasst und mittels einer Analyseeinheit ausgewertet. Die Auswertungsergebnisse werden in einer abrufbaren Form gespeichert und stehen so für nachgelagerte datentechnische Verarbeitungen zur Verfügung. Die Analyseeinheit ist beispielsweise ein Rechner.

Das Bereitstellen der Referenzprobe in diesem und weiteren Verfahren kann erfolgen, indem ein Nutzer die Referenzprobe einlegt und positioniert. Möglich ist auch die Nutzung von Algorithmen der künstlichen Intelligenz zur Auswahl und/oder korrekten Positionierung der Referenzprobe. Eine Erkennung der Referenzprobe sowie eine korrekte Positionierung kann in weiteren Ausgestaltungen erfolgen, indem eine maschinenlesbare Kodierung erkannt, erfasst und ausgewertet wird. Anhand der Auswertungsergebnisse können die erforderlichen Steuerbefehle generiert und beispielsweise Antriebe eines Probentisches entsprechend angesteuert werden.

Dabei kann in Abhängigkeit einer aktuell auszuführenden Kalibrierung die Referenzprobe erkannt und überprüft werden, welches der darauf enthaltenen Testmuster für die aktuelle Kalibrierung geeignet ist. Ist ein passendes Testmuster vorhanden, wird dieses so positioniert, dass nachfolgend die Kalibrierung ausgeführt werden kann. Die einzelnen Kalibrierungen können automatisiert nacheinander ausgeführt werden. Während oder nach einer Kalibrierung können einem Nutzer Informationen zum aktuellen Stand und zum Ergebnis der jeweiligen Kalibrierung gegeben werden, um eine Erfolgskontrolle zu erlauben und ein eventuell erforderliches Eingreifen des Nutzers zu ermöglichen. Am Ende der Kalibrierung kann dem Nutzer ein Bericht zum Ablauf der Kalibrierung mit Erfolgsbewertung und weiteren Parametern angezeigt werden.

Entsprechendes gilt, wenn anschließend eine weitere Kalibrierung durchgeführt werden soll, um beispielsweise andere Komponenten des optischen Systems, insbesondere des Mikroskops, zu kalibrieren.

Die Referenzprobe kann außerdem in einem Verfahren zur Referenzierung wenigstens zweier Mikroskope zueinander eingesetzt werden. Ein solches Verfahren umfasst den Schritt des Bereitstellens der Referenzprobe im Strahlengang eines ersten Mikroskops, wobei mindestens eine Teilstruktur einer ausgewählten Strukturierung der Referenzprobe in ein Objektfeld (Sichtfeld, field of view; FoV) des ersten Mikroskops gebracht wird. Es werden mittels des ersten Mikroskops Bilddaten mindestens einer Teilstruktur erfasst, ausgewertet und die ersten Auswertungsergebnisse in abrufbarer Form gespeichert. Optional können außerdem die Einstellungs- oder Betriebsparameter des ersten Mikroskops gespeichert werden. Um zwei oder mehr Mikroskope miteinander vergleichen zu können ist es vorteilhaft, wenn die Aufnahmebedingungen der Bilder möglichst vergleichbar sind. So können zum Beispiel Einstellungen der Beleuchtungsleistung, der Pixelauflösung sowie Parameter des verwendeten Objektivs gespeichert werden, um diese mit entsprechenden Betriebsparametern des zweiten Mikroskops einzustellen oder sich diesen zumindest anzunähern.

Die Referenzprobe wird im Strahlengang eines zweiten Mikroskops bereitgestellt, wobei wiederum mindestens eine, vorzugsweise dieselbe, Teilstruktur der ausgewählten Strukturierung der Referenzprobe in ein Objektfeld (Sichtfeld, field of view; FoV) des zweiten Mikroskops gebracht wird. Mittels des zweiten Mikroskops werden Bilddaten mindestens einer Teilstruktur erfasst, ausgewertet und die Auswertungsergebnisse als zweite Auswertungsergebnisse bereitgestellt. Die ersten und zweiten Auswertungsergebnisse werden miteinander verglichen.

Eine Erkennung und Auswertung der Referenzprobe kann nach einer vorab festgelegten Routine erfolgen, die beispielsweise in einer Steuereinheit gespeichert ist und bei Bedarf abgerufen wird. Alternativ kann ein Verfahren unter Nutzung künstlicher Intelligenz und/oder neuronaler Netzwerke ausgeführt werden, um zum Beispiel erfasste Parameter an aufgenommene Bildinhalte anzupassen und die Bilderfassung zu optimieren.

In einer weiterführenden Ausgestaltung des Verfahrens werden mittels einer Vergleichseinheit die ersten und/oder die zweiten Auswertungsergebnisse mit Erwartungswerten verglichen.

Zusätzlich oder alternativ kann das betreffende Mikroskop auf Basis der Auswertungsergebnisse oder der Vergleichsergebnisse klassifiziert werden. Dazu kann es beispielsweise in zuvor festgelegte Gruppen zugeordnet werden.

Anhand der ermittelten Messwerte ist es möglich, technische Parameter des optischen Systems abzuleiten und beispielsweise bei der Ansteuerung von motorisierten Komponenten zu nutzen.

Ferner ist es möglich, anhand der festgestellten Parameter beteiligter Komponenten und erfasster spezifischer optischer Wirkungen Signalkurven anzupassen, um die Qualität der erfassten Bilddaten zu verbessern.

Neben einer automatisierten Kalibrierung und Justage können die Ergebnisse der Erfassung der Referenzprobe und deren Auswertung für eine automatisierte Erfassung bestimmter Probenbereiche verwendet werden.

Außerdem ist es möglich, Kalibrierkurven beispielsweise einer Beleuchtungsleistung zu erstellen und beispielsweise in einer look-up-table oder einer Funktion abzuspeichern.

Vorteil der Erfindung ist insbesondere die Verwendung einer nicht bleichenden Probe. Dadurch ist es möglich, direkte Vergleiche zwischen Systemen anzustellen, ohne dass es zu Degradationseffekten oder Unsicherheiten aufgrund unterschiedlicher Lumineszenzantwort bei gleicher Beleuchtungsstärke infolge z. B. Bleichens kommt. Daher sind auch keine Wartezeiten zur Erholung der Probe nach einer Benutzung einzuhalten. Die Wiederholbarkeit von Messungen und Vergleichen ist erheblich verbessert. Außerdem sind sehr gut Langzeitbelichtungen und Vergleiche von Langzeitstabilität der Systeme möglich. Testmuster im Sinne der Erfindung sind mit Größen in lateraler Richtung von 20 nm bis 2 µm mit hoher Reproduzierbarkeit und geringen Abweichungen herstellbar. Zusätzlich eröffnen die Absorptionsspektren der erfindungsgemäßen Referenzproben in den unterschiedlichen Ausführungsformen und deren breite Emissionsspektren den Einsatz in vielen unterschiedlichen optischen Systemen.

Die Erfindung wird nachfolgend anhand von Ausführungsbeispielen und Abbildungen erläutert. Dabei zeigen:
- Fig. 1: eine schematische Darstellung eines Ausführungsbeispiels einer erfindungsgemäßen Referenzprobe mit fünf unterschiedlichen Strukturierungen, die jeweils aus einer Anzahl von Teilstrukturen gebildet sind;
- Fig. 2: eine schematische Darstellung eines Ausführungsbeispiels eines Mikroskops mit einem weiteren Ausführungsbeispiel einer erfindungsgemäßen Referenzprobe;
- Fig. 3a bis 3e: schematische Darstellungen von fünf Testmustern mit zunehmenden Abständen der Teilstrukturen zueinander; gezeigt sind in einer Zeile angeordnete Linienpaare, in Fig. 3a als senkrechte oder vertikale Linienpaare, in Fig. 3b als geneigte Linienpaare und in Fig. 3c als horizontale Linienpaare; Fig. 3d mit zunehmenden Abständen und Fig. 3e als ein Gitter;
- Fig. 4: eine schematische Darstellung eines Ausführungsbeispiels einer Referenzprobe mit einem Testmuster in Form eines Siemenssterns;
- Fig. 5: eine schematische Darstellung eines Ausführungsbeispiels einer Referenzprobe mit einem Testmuster in Form eines Rasters aus regelmäßig angeordneten Flächen als Teilstrukturen;
- Fig. 6: eine schematische Darstellung eines Ausführungsbeispiels einer Referenzprobe mit einem Testmuster in Form eines inneren Rasters aus regelmäßig angeordneten Flächen als erste Teilstrukturen und eines äußeren Rasters mit zweiten Teilstrukturen;
- Fig. 7: eine schematische Darstellung eines Ausführungsbeispiels einer Referenzprobe mit einem Testmuster in Form eines Rasters aus nicht zur Emission anregbaren Flächen in einer zur Emission anregbaren Matrix;
- Fig. 8: eine schematische Darstellung eines ersten Ausführungsbeispiels einer axialen Teilstruktur in Form zweier sich in z-Richtung schneidender Linien sowie eine Verfahrensweise zur Bestimmung des axialen Auflösungsvermögens;
- Fig. 9a und 9b: eine schematische Darstellung eines zweiten Ausführungsbeispiels einer axialen Teilstruktur in Form zweier sich einander annähernder Linien in einer perspektivischen Ansicht (Fig. 9a) und in einer Draufsicht (Fig. 9b);
- Fig. 10a und 10b: eine schematische Darstellung eines dritten Ausführungsbeispiels einer axialen Teilstruktur in Form einer Anordnung von kugelförmigen axialen Teilstrukturen in einer perspektivischen Ansicht (Fig. 10a) und in einer Draufsicht (Fig. 10b);
- Fig. 11: ein Ablaufschema einer Ausgestaltung eines Verfahrens zur Kalibrierung eines Mikroskops mittels einer erfindungsgemäßen Referenzprobe; und
- Fig. 12: ein Ablaufschema einer Ausgestaltung eines Verfahrens zum Vergleich eines ersten Mikroskops mit einem zweiten Mikroskop unter Verwendung einer erfindungsgemäßen Referenzprobe.

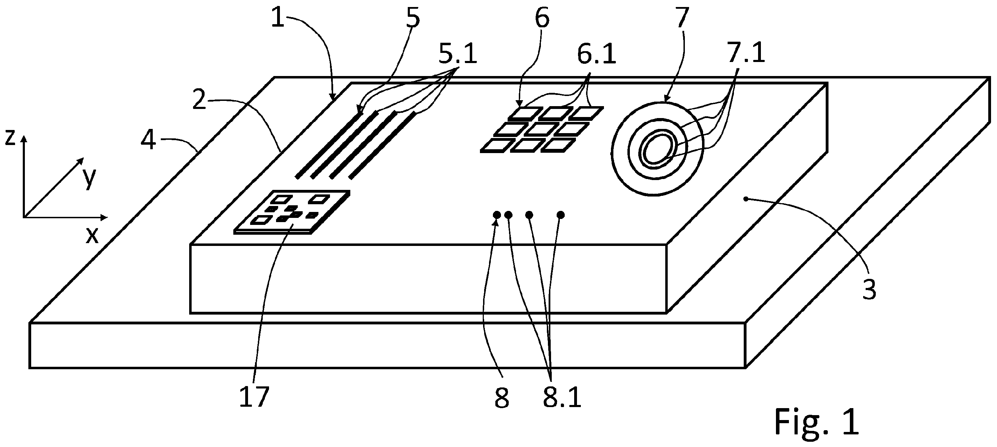

Die in der Fig. 1 schematisch gezeigte Referenzprobe 1 weist eine Trägerstruktur 2 aus NV-Diamant als Trägermaterial 3 auf. Auf einer Seitenfläche der Trägerstruktur 2 sind eine erste bis vierte Strukturierung 5, 6, 7 und 8 (= Testmuster 5, 6, 7 beziehungsweise 8) aufgebracht, die aus Teilstrukturen 5.1 in Form von in einer Zeile angeordneter Linien, Teilstrukturen 6.1 in Form von quadratischen Flächen, aus Teilstrukturen 7.1 in Form konzentrischer Ringe beziehungsweise Teilstrukturen 8.1 in Form punktförmiger Flächen gebildet sind. Außerdem ist eine Teilstruktur vorhanden, die als eine maschinenlesbare Kodierung 17 in Form eines QR-Codes ausgebildet ist. Die Seitenfläche mit den Strukturierungen 5, 6, 7 und 8 erstreckt sich in einer Ebene, die zu einer X-Y-Ebene eines kartesischen Koordinatensystems parallel ist.

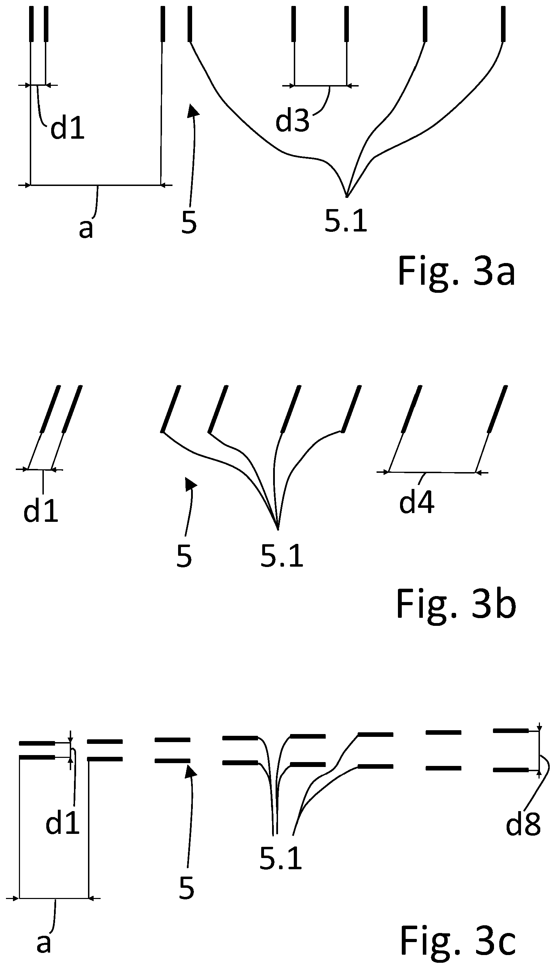

Die Teilstrukturen 5.1 der ersten Strukturierung 5 sind Linienpaare, deren jeweiliger Abstand di (i = 1, 2, ..., n) zueinander variiert (siehe Figur 3a bis 3c). Gleiches gilt für die vierten Teilstrukturen 8.1. Ebenso nehmen die Radien der Teilstrukturen 7.1 des dritten Testmusters 7 von innen nach außen mit ansteigenden Schrittweiten zu.

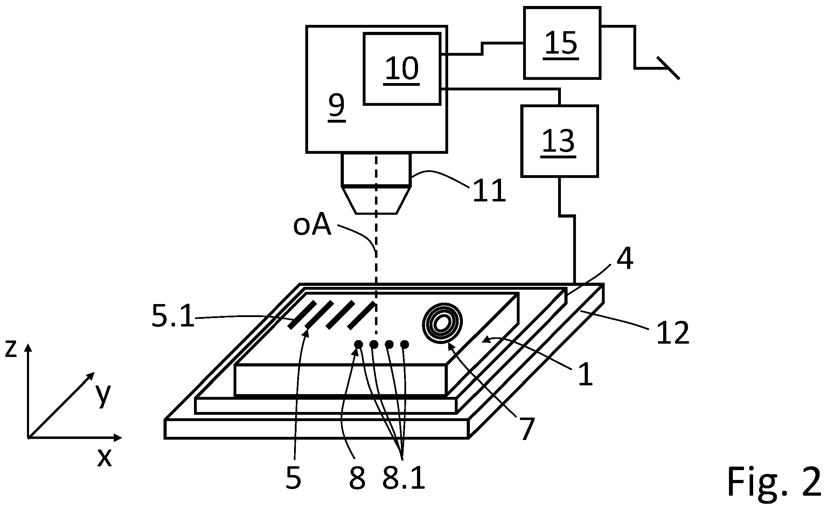

In der Fig. 2 ist die Verwendung einer erfindungsgemäßen Referenzprobe 1 zur Kalibrierung und/oder Justierung eines insbesondere hochauflösenden Mikroskops 9 veranschaulicht. Das Mikroskop 9 besitzt eine Auswerte- und Steuereinheit 10, mittels der eine Auswertung erfasster Bilddaten sowie die Erzeugung und Übermittlung von Steuerbefehlen möglich ist. Die Auswerte- und Steuereinheit 10 ist hierfür entsprechend konfiguriert. Die Erfassung von Bilddaten, und optional auch eine Beleuchtung der Referenzprobe 1, erfolgt mittels eines Objektivs 11, dessen optische Achse oA in z-Richtung auf die Referenzprobe 1 und die Strukturierungen 5, 7 und 8 gerichtet ist. Dieses Ausführungsbeispiel der Referenzprobe 1 weist keine zweite Strukturierung 6 auf. Ein nicht dargestelltes weiteres oder zweites Mikroskop 9 kann die gleichen Elemente wie in Fig. 2 gezeigt aufweisen.

Die Referenzprobe 1 ist auf einem Probentisch 12 angeordnet. Dieser ist optional in Richtung mindestens einer Achse x, y und z mittels der Antriebe 13 gesteuert verfahrbar. Eine Steuerung der Bewegung des Probentisches 12 kann durch Steuerbefehle der Auswerte- und Steuereinheit 10 erfolgen. Eine ebenfalls vorhandene Vergleichseinheit 15 ist beispielsweise als ein Rechner ausgebildet und dazu konfiguriert, um Auswerteergebnisse der Auswerte- und Steuereinheit 10 miteinander zu vergleichen und Vergleichsergebnisse zur Verfügung zu stellen. Die Vergleichseinheit 15 kann außerdem dazu ausgebildet sein, um Auswerteergebnisse eines anderen optischen Systems, beispielsweise eines anderen Mikroskops, zu erhalten und mit Auswerteergebnissen des ersten Mikroskops 9 zu vergleichen (durch die blind endende Verbindung symbolisiert).

Zum Zwecke der Kalibrierung wird mindestens eine der Strukturierungen 5, 7 und 8 mit einer geeigneten Anregungsstrahlung beleuchtet und die Emission von Licht, beispielsweise einer Fluoreszenzstrahlung, angeregt. Das emittierte Licht wird mit dem Mikroskop 9 erfasst und die Bilddaten der betreffenden Strukturierung 5, 7 und/oder 8 in der dafür konfigurierten Auswerte- und Steuereinheit 10 analysiert. Können die entsprechenden erfassten Strukturierungen 5, 7 beziehungsweise 8, deren Abmessungen bekannt sind, mit einer zulässigen Sicherheit oder zu einem vorbestimmten Grad aufgelöst werden, ist das Mikroskop 9 korrekt kalibriert.

Können die erfassten Strukturierungen 5, 7 beziehungsweise 8 dagegen nicht hinreichend aufgelöst werden, können Steuerbefehle generiert werden, durch deren Wirkung der Probentisch 12 verfahren, technische Parameter des Mikroskops 9 verändert und/oder eine rechnerische Auswertung der Bilddaten angepasst werden. Diese Maßnahmen werden vorgenommen, um das Mikroskop 9 zu kalibrieren.

Es kann auch alternativ oder zusätzlich eine Justierung erfolgen, indem die optische Achse oA des Objektivs 11 in eine vorbestimmte Relativlage zu wenigstens einer der Teilstrukturen 5.1, 7.1 (aus Gründen der Übersichtlichkeit nicht alle bezeichnet) und/oder 8.1 gebracht wird. Für eine Justierung sind insbesondere die punktförmigen Teilstrukturen 8.1 des Testmusters 8 geeignet.

In den Fig. 3a bis 3c sind drei Abwandlungen des ersten Testmusters 5 gezeigt, die jeweils als eine Anzahl von Paaren von Linienabschnitten (Linienpaare) als Teilstrukturen 5.1 ausgebildet sind. Der Begriff der Linienabschnitte ist aufgrund der geringen Längen der einzelnen Teilstrukturen 5.1 gewählt, die etwa 10 µm betragen. In allen drei Ausführungen (Fig. 3a bis 3c) nimmt ein Abstand di (i = 1, 2, ..., n) der Linienabschnitte eines Linienpaares von links nach rechts zu (nur einige beispielhaft bezeichnet). In Fig. 3a ist der Abstand d1 der Linienabschnitte des ersten Linienpaares zueinander geringer als der Abstand d3 des dritten Linienpaares. Die in Fig. 3a gezeigten Teilstrukturen 5.1 sind zueinander parallele und bezüglich einer Zeilenrichtung von links nach rechts vertikal angeordnete Linienpaare. Während sich die Abstände d1 bis d4 in Zeilenrichtung schrittweise ändern, sind die jeweils ersten Linienabschnitte eines Linienpaares zueinander mit einem konstanten Pitch a von beispielsweise 10 µm beabstandet (nur für das erste und das zweite Linienpaar gezeigt). Entsprechendes gilt für die Ausführungsformen der in den Fig. 3b und 3c gezeigten Teilstrukturen 5.1. Die in Fig. 3b gezeigten Linienpaare sind ebenfalls zueinander parallel, aber gegen eine vertikale Richtung geneigt. In der Fig. 3c sind Linienpaare horizontal in einer Zeile angeordnet.

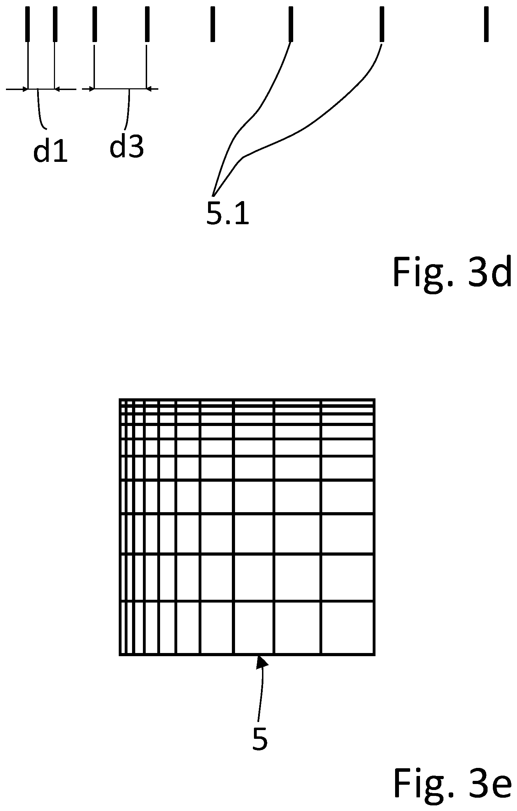

Eine Ausführungsmöglichkeit mit zunehmenden Abständen zwischen benachbarten Linienabschnitten ist in der Fig. 3d gezeigt. Eine derartige weitere Gestaltung des Testmusters 5 kann beispielsweise zur Ermittlung der MTF genutzt werden.

Eine zweidimensionale Abwandlung eines Testmusters 5 mit sich verändernden Abständen ist in Fig. 3e in Form eines Gitters realisiert.

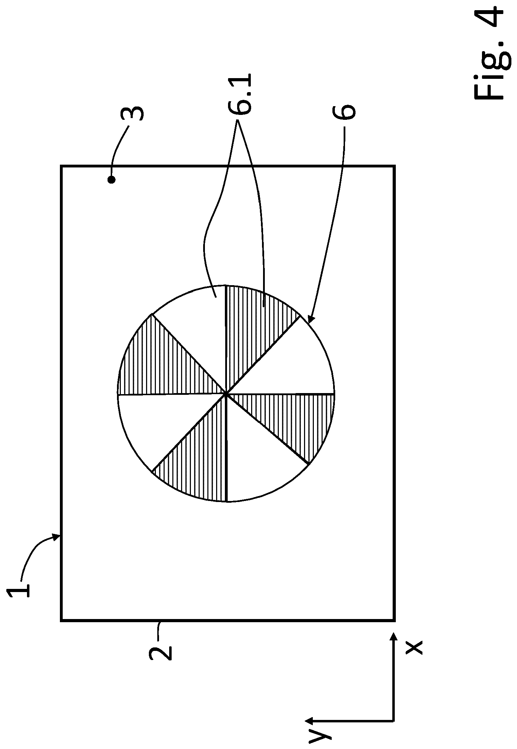

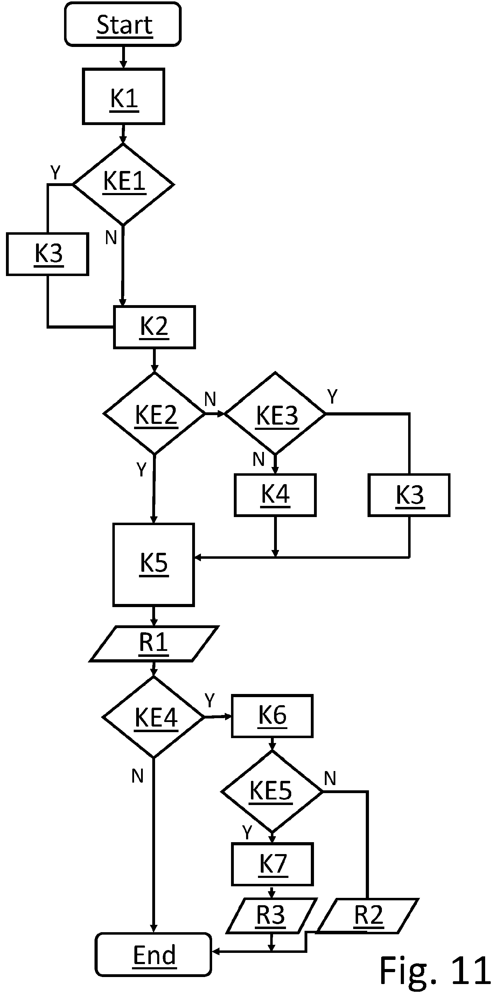

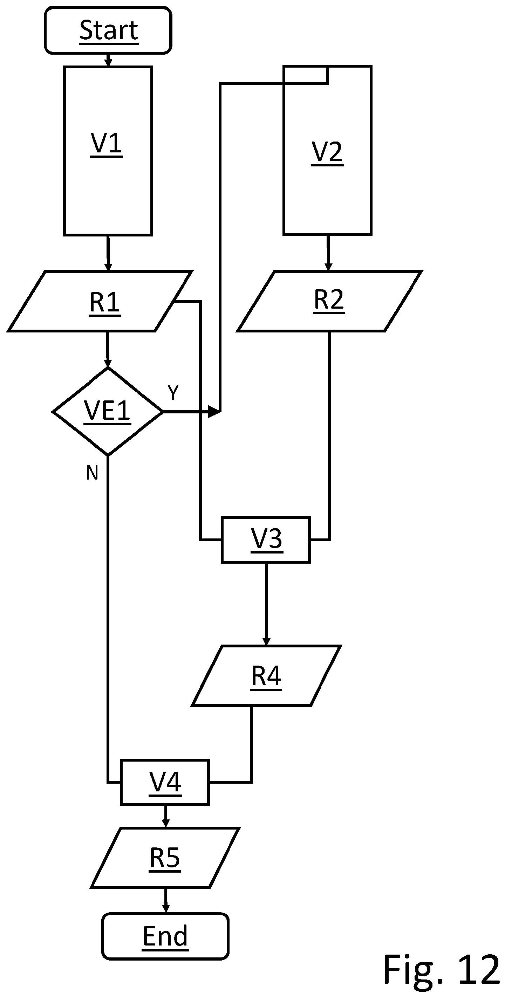

Ein weiteres Ausführungsbeispiel eines erfindungsgemäßen Testmusters 6 ist ein sogenannter Siemensstern (Fig. 4). Dieser ist aus einer Anzahl keilförmiger Kreissektoren zusammengesetzt, die alternierend zur Emission von Lumineszenzlicht anregbar (schraffiert dargestellt) sind beziehungsweise nicht anregbar (nicht schraffiert) sind. Im gezeigten Ausführungsbeispiel sind insgesamt acht Keilflächen vorhanden. In weiteren Ausführungsbeispielen sind beispielsweise sechzehn Keilflächen ausgebildet (zur besseren Übersicht nicht dargestellt). Der äußere Durchmesser des Siemenssterns beträgt beispielsweise 20 µm. Ein Testmuster 6 in Form eines Siemenssterns erlaubt in bekannter Weise die Ermittlung des Auflösungsvermögens, indem die detektionsseitig maximal erreichbare Auflösung der sich zur Mitte des Testmusters 6 hin verjüngenden Kreissektoren gesucht wird. Zudem kann das Testmuster 6 in Form des Siemenssterns zur Kalibrierung eines Mikroskops 9 und/oder zum Vergleich wenigstens zweier Mikroskope 9 verwendet werden (siehe z. B. Fig. 11 und 12).

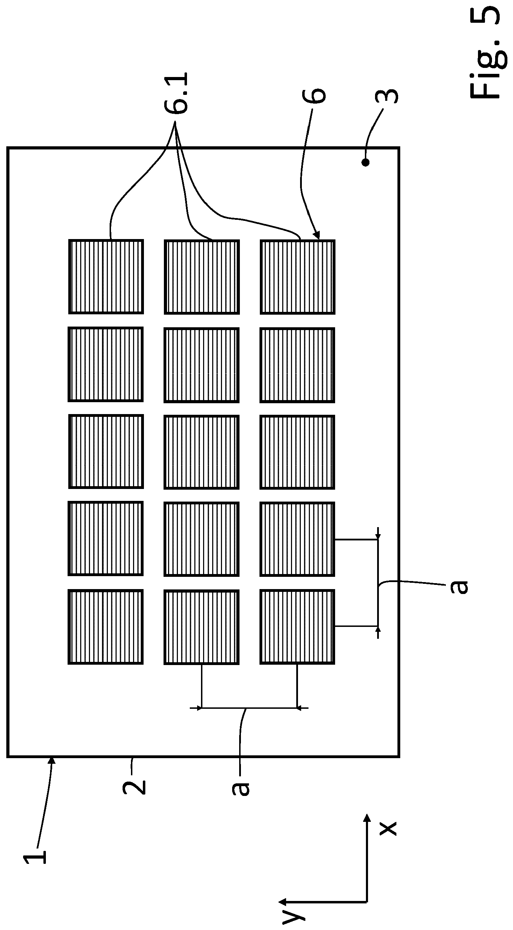

Wie bereits zu Fig. 1 beschrieben, kann das Testmuster 6 ein Raster gleichartiger Teilstrukturen 6.1 sein. Im Ausführungsbeispiel nach Fig. 5 sind die Teilstrukturen 6.1 Quadrate, die in einem regelmäßigen Raster mit einem konstanten Pitch a angeordnet sind. Das dargestellte Testmuster 6 erlaubt eine Kontrolle hinsichtlich des Auftretens von Verzeichnungen im Bild. So können die korrekten, unverzerrten Abbildungen der Umrisse der Teilstrukturen 6.1 als Beleg für eine verzeichnungsfreie Abbildung dienen. Außerdem kann die Helligkeit auf der optischen Achse und im Feld bestimmt und eventuelle Vignettierungen erkannt und erfasst werden.

In weiteren Ausführungen des Testmusters 6 können die Teilstrukturen 6.1 als Punkte oder Kreise ausgebildet sein (nicht gezeigt).

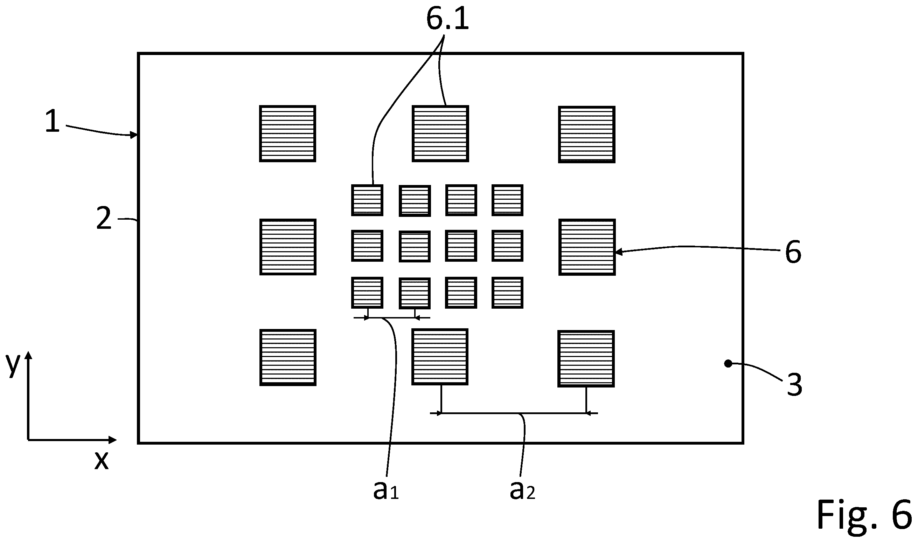

In einer Referenzprobe 1 können auch innerhalb eines Testmusters 6 unterschiedlich große und/oder unterschiedlich geformte Teilstrukturen 6.1 vorhanden sein (Fig. 6). Dabei können eine Anzahl von Teilstrukturen 6.1 beispielsweise in Form von Quadraten mit einer ersten Kantenlänge in einem inneren Raster angeordnet sein. Die Teilstrukturen 6.1 des inneren Rasters besitzen entlang der Zeilen und Spalten des Rasters einen konstanten ersten Pitch a1. Das innere Raster ist von einem äußeren Raster umgeben, das durch Teilstrukturen 6.1 mit einer zweiten Kantenlänge gebildet ist und die voneinander mit einem zweiten Pitch a2 beabstandet sind. Die zweite Kantenlänge und der zweite Pitch a2 ist größer als die erste Kantenlänge beziehungsweise der erste Pitch a1 der Teilstrukturen 6.1 des inneren Rasters.

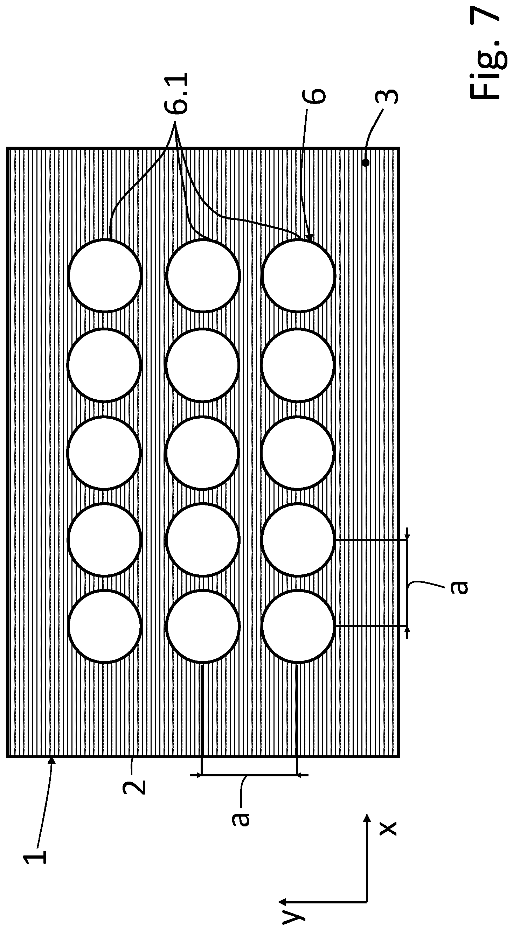

Die Teilstrukturen 6.1 können in einer weiteren Ausführung einer erfindungsgemäßen Referenzprobe 1 als nicht zur Emission von Lumineszenzstrahlung anregbare Flächen, beispielsweise als Kreisflächen, ausgebildet sein, die in einer zur Emission von Lumineszenzstrahlung anregbaren Fläche (Matrix 16) eingebettet sind (Fig. 7).

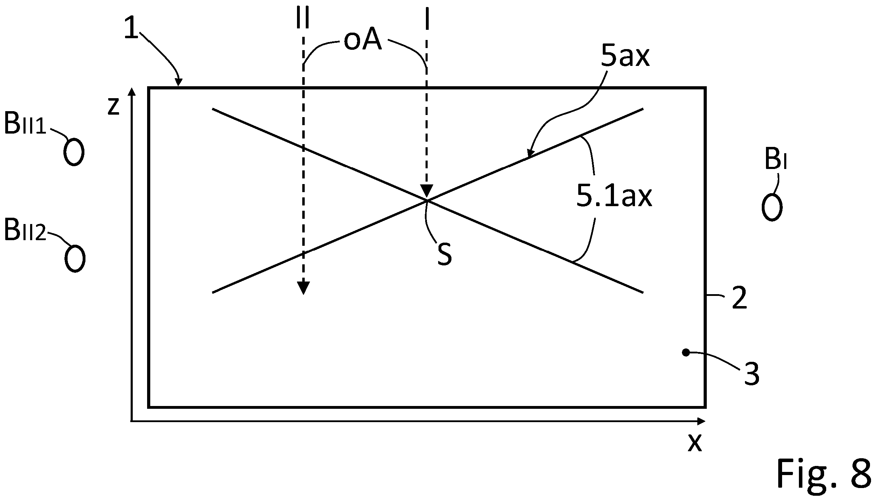

Zusätzlich oder alternativ zu lateralen Teilstrukturen 5.1, 6.1, 7.1, 8.1 zur Ermittlung des Auflösungsvermögens in lateraler Richtung mithilfe der lateralen Teilstrukturen 5.1, 6.1, 7.1, 8.1 (siehe Fig. 1 bis 3) weist eine erfindungsgemäße Referenzprobe 1 mindestens eine axiale Teilstruktur 5.1ax auf. In einem Ausführungsbeispiel (Fig. 8) ist das axiale Testmuster 5ax aus zwei sich in Richtung der z-Achse (z-Richtung) in einem Schnittpunkt S schneidenden Linien gebildet, die schräg in dem Trägermaterial 3 verlaufend ausgebildet sind.

Ist das Mikroskop 9 (siehe Fig. 2) relativ zur Referenzprobe 1 so angeordnet, dass dessen optische Achse oA in den Schnittpunkt S der Teilstrukturen 5.1ax gerichtet ist (Szenario I), wird nur an diesem Schnittpunkt S Lumineszenzlicht bewirkt und ein Bild I aus einer z-Position erhalten, die der Position des Schnittpunkts S in z-Richtung entspricht (mit einem Oval B I symbolisiert). Der Schnittpunkt S wird dabei gefunden, indem der Fokus des Mikroskops 9 beziehungsweise des Objektiv 11 in z-Richtung verschoben wird. Die z-Position des Bildes BI1 kann mit einer erwarteten z-Position des Schnittpunkts S verglichen und zur Kalibrierung des Mikroskops beziehungsweise Justierung verwendet werden.

Sind dagegen die Referenzprobe 1 und die optische Achse oA in einer seitlich verschobenen Relativlage (Szenario II), so wird eine Lumineszenz bewirkt, wenn der Fokus die näher an der Oberfläche der Trägerstruktur 2 verlaufenden Teilstruktur 5.1ax trifft. Diese Lumineszenz wird als erstes Bild B_{II1} erfasst und zusammen mit der zugehörigen z-Position gespeichert. Wird anschließend der Fokus weiter entlang der optischen Achse oA verschoben, wird auf einer Strecke kein Lumineszenzlicht erfasst, die einem Zwischenraum der Teilstrukturen 5.1ax entlang des Verlaufs der optischen Achse oA entspricht. Fällt die Fokusposition mit der z-Position der tiefer in der Trägerstruktur 2 liegenden Teilstruktur 5.1ax zusammen, wird erneut Lumineszenzlicht bewirkt. Es wird ein zweites Bild B_{II2} erfasst und mit der zugehörigen z-Position gespeichert. Anhand der gespeicherten z-Positionen der Bilder B_{II1} und B_{II2} sowie anhand des Umstands, dass ein erstes Bild B_{II1} bereits nach Zurücklegen einer Verschiebestrecke des Fokus erfasst wurde, die geringer ist als die zum Erreichen der erwarteten z-Position des Schnittpunkts erforderliche Verschiebestrecke, kann auf die aktuelle Relativlage von Referenzprobe 1 und optischer Achse oA geschlossen werden.

Diese axialen Teilstrukturen 5.1ax werden zur Ermittlung der axialen Auflösung des Mikroskops 9 genutzt. Das Vermögen zur Auflösung der entstehenden Lücke zwischen den Strukturen ist ein Maß für die Fähigkeit des Systems, Größen von Strukturen axial voneinander zu unterscheiden.

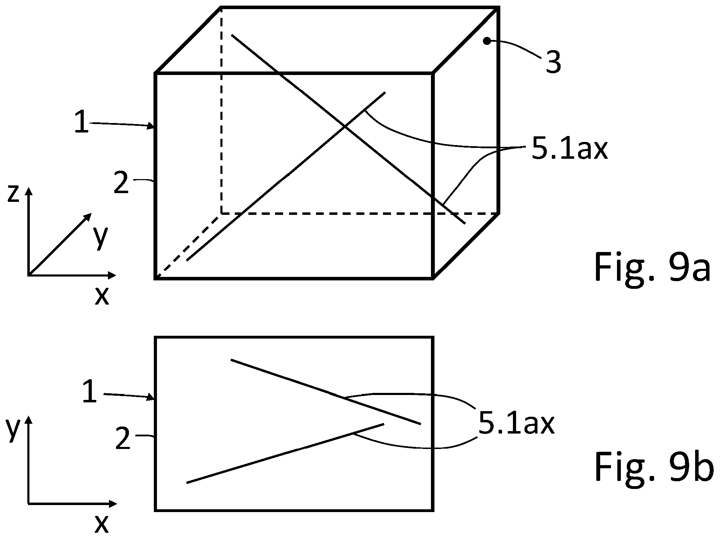

In einer Abwandlung der Erfindung sind die axialen Teilstrukturen 5.1ax des Testmusters 5ax ebenfalls als zwei schräg im Trägermaterial 3 verlaufende Linien (Fig. 9a) realisiert, allerdings schneiden sich diese nicht. Die Teilstrukturen 5.1ax verlaufen dreidimensional, d.h. in zwei zueinander verkippten Ebenen, in dem Trägermaterial 3. In der Fig. 9b, die eine Draufsicht auf die Trägerstruktur 2 in z-Richtung angibt, ist zu sehen, dass sich die Teilstrukturen 5.1ax einander annähern, sich aber nicht schneiden.

Zum Zwecke der Justierung und/oder Kalibrierung kann im Prinzip wie zu Fig. 8 beschrieben vorgegangen werden. Statt des Auffindens eines Schnittpunkts S kann der Abstand der Teilstrukturen 5.1ax zueinander als ein Maß für das Auflösungsvermögen beziehungsweise für die Justierung verwendet werden.

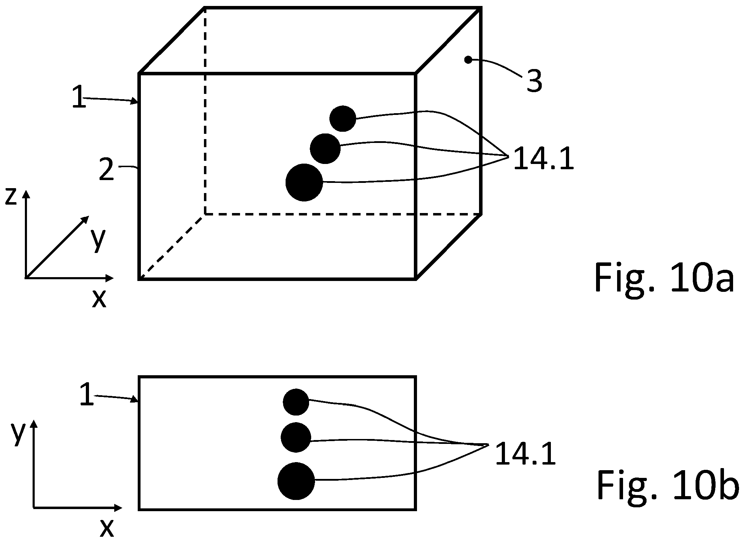

Axiale Teilstrukturen 14.1 eines weiteren axialen Testmusters 14 können auch Kugeln mit unterschiedlichen Durchmessern sein, wie dies schematisch in Fig. 10b gezeigt ist. Die Teilstrukturen 14.1 können in einer gemeinsamen z-Position ausgebildet sein (Fig. 10a). In weiteren Ausführungen des Testmusters 14 können die Kugeln auch in unterschiedlichen Tiefen, also an unterschiedlichen z-Positionen angeordnet sein.

Anhand der Fig. 11 soll eine Ausgestaltung eines erfindungsgemäßen Verfahrens zur Kalibrierung eines hoch- beziehungsweise super-auflösenden optischen Geräts, insbesondere eines Mikroskops 9, erläutert werden. Die nachfolgenden Schritte können jeweils eine Mehrzahl einzelner Maßnahmen umfassen, die zum Zwecke der besseren Übersichtlichkeit in Fig. 11 (entsprechend dann auch in Fig. 12) funktional und graphisch zu Blöcken zusammengefasst werden.

Zu Beginn wird eine erfindungsgemäße Referenzprobe 1 in das zu kalibrierende optische System eingelegt. Das Einlegen kann durch einen Nutzer oder automatisiert erfolgen. Möglich ist auch die Nutzung von Algorithmen der künstlichen Intelligenz zur Auswahl und/oder korrekten Positionierung der Referenzprobe 1. Ein zur Durchführung des Messaufgabe bzw. der Kalibrierung eingerichtetes Programm wird gestartet und gegebenenfalls die Messaufgabe spezifiziert (Schritt K1). In einer zu treffenden ersten Entscheidung (KE1) wird über die Notwendigkeit der Ausführung einer Referenzfahrt befunden. Im Falle der Verneinung (N) erfolgt eine automatische Auswahl und/oder Bestimmung der Parameter für eine Bildaufnahme. Anschließend wird ein erstes Bild erfasst und gespeichert (Schritt K2).

Im Fall des Bejahens (Y) der ersten Entscheidung (KE1) wird in Schritt K3 eine Referenzierungsfahrt ausgeführt und/oder eine aktuelle Position des Probentisches 12 bestimmt, bevor mit Schritt K2 fortgefahren wird.

Gegenstand des anschließenden zweiten Entscheidungsschritts KE2 ist die Frage, ob die abzubildende Referenzprobe 1 im erfassten Bild sichtbar ist. Ist dies nicht der Fall (N), wird im dritten Entscheidungsschritt KE3 entschieden, ob in einem Schritt K3 eine manuelle Suche erfolgt oder ob in einem Schritt K4 eine automatisierte Suche ausgeführt wird. Bei beiden Alternativen der Suche können Referenzmarken genutzt werden, die im Schritt K3 durch einen Benutzer beziehungsweise im Schritt K4 durch das optische System bereitgestellt werden.

Ist die Referenzprobe 1 im erfassten Bild enthalten, kann direkt mit Schritt K5 fortgefahren werden. In diesem erfolgt ein Anfahren an vorhandene Referenzmarken, um die gewünschte Ausgangslage von Probentisch 12, Mikroskop 9 und Referenzprobe 1 herbeizuführen. Es folgt das Anfahren der zu messenden Strukturierung 5, 6, 7 bzw. 8 und die Aufnahme eines Bildes derselben. Die erfassten Bilddaten werden hinsichtlich beispielsweise des Bildinhalts, der Bestimmung von Abständen di, der Helligkeit, der Homogenität usw. ausgewertet. Zusätzlich oder alternativ können erfasste Strukturierungen 5, 6, 7 bzw. 8 als Referenzmarken verwendet werden.

Die so gewonnenen Ergebnisse werden ausgegeben beziehungsweise abrufbar gespeichert und zur Verfügung gestellt (Schritt R1).

Sollen die Ergebnisse aus Schritt R1 nicht (N) mit theoretischen Werten verglichen werden (vierter Entscheidungsschritt KE4), kann das Verfahren beendet werden. Soll dagegen ein solcher Vergleich durchgeführt werden (Y), wird Schritt K6 ausgeführt. Die Vergleichsergebnisse können optional für eine Klassifizierung des Systems genutzt werden (KE5). Soll keine Klassifizierung erfolgen (N), werden die Vergleichsergebnisse ausgegebenen beziehungsweise abrufbar gespeichert (R2) und das Verfahren wird beendet.

Alternativ (Y) wird in Schritt K7 eine Klassifizierung des Systems anhand des Grads der Übereinstimmung mit dem theoretischen Wert beziehungsweise des Erreichens des theoretischen Werts durchgeführt.

Die Vergleichsergebnisse und die erzeugte Klassifizierung werden ausgegeben beziehungsweise abrufbar gespeichert (R3) und das Verfahren wird beendet. Die Verfahrensschritte können für ein zweites Mikroskop 9 wiederholt werden.

Eine Ausgestaltung eines Verfahrens zum Vergleich zweier optischer Systeme, insbesondere zweier Mikroskope 9, wird anhand von Fig. 12 beschrieben. Die Referenzprobe 1 wird in ein erstes Mikroskop 9 eingelegt, die relevanten Probestellen, insbesondere das gewünschte Testmuster 5, 6, 7 bzw. 8 gesucht und die Bildaufnahme vorbereitet. Dazu müssen die nötigen Parameter der Bildaufnahme bekannt sein bzw. gespeichert werden (Schritt V1). Solche Parameter sind beispielsweise die zeitliche Auflösung, die Pixelauflösung, die Lichtintensität, der Detektor-Gain, Beleuchtungszeiten, Scangeschwindigkeit und spektrale Aufteilung. Ebenfalls werden unter Schritt V1 eine Bilderfassung und eine Auswertung der erfassten Bilddaten subsumiert. Die Bilderfassung kann alle räumlichen Dimensionen (2D, 3D) sowie einen Zeitverlauf umfassen. Die Auswertung ist beispielsweise auf ein als relevant eingestuftes Merkmal gerichtet. Ein solches Merkmal ist zum Beispiel ein erfasstes Intensitätsprofil des Testmusters 5, 6, 7 bzw. 8, von dem wenigstens ein Abstand der Maxima der Intensitäten ausgewertet wird.

Die Auswertung kann sich zusätzlich oder alternativ auf die Größe der zur Emission von Lumineszenzlicht angeregten Bereiche der Teilstrukturen 5.1 bis 8.1, 14.1 (z. B. Nutzung der Halbwertsbreite); auf eine Größe einer Lücke zwischen angeregten Bereichen (z. B. über das Raleigh-, Dawes-, Sparrow-Kriterium); eine Gleichförmigkeit/Homogenität von angeregten Bereichen; eine zeitliche Konstanz beziehungsweise Variation der angeregten Bereiche richten. Dabei kann sich die Auswertung an Kriterien wie zum Beispiel dem Nyquist-Shannon-Theorem, dem Signal-to-Noise-Ratio; Kontrast; einer benötigten Auflösung orientieren. Die Referenzprobe 1 wird aus dem ersten Mikroskop 9 entnommen.

Die ermittelten Parameter werden ausgegeben und gespeichert (R1). In einem ersten Entscheidungsschritt VE1 des Verfahrens ist die Frage zu beantworten, ob ein Vergleich der Auswertungsergebnisse des ersten Mikroskops 9 mit denen eines zweiten Mikroskops 9 erfolgen soll. Im Falle der Verneinung (N) erfolgt ein Vergleich mit theoretischen Werten in Schritt V4. Diese können beispielsweise die theoretisch erreichbare Auflösung nach dem Abbe-Kriterium sein. Das Ergebnis des Vergleichs wird ausgegeben oder es wird eine Klassifizierung des ersten Mikroskops 9 vorgenommen (R5) und das Verfahren wird beendet.

Wird dagegen im Entscheidungsschritt VE1 der Vergleich mit einem zweiten Mikroskop 9 bejaht (Y), wird die Referenzprobe 1 in das zweite Mikroskop 9 eingelegt und in Schritt V2 die Maßnahmen entsprechend V1 ausgeführt. Die Ergebnisse werden ausgegeben und gespeichert (R2).

Dabei werden die Systemparameter des ersten Mikroskops 9, soweit möglich, auf das zweite Mikroskop 9 angewendet. So können beispielsweise eine zeitliche Auflösung, eine Pixelauflösung, die Lichtintensität, ein Detektor-Gain, Belichtungszeiten, Scangeschwindigkeit und/oder spektrale Aufteilung übernommen werden. Gegebenenfalls erfolgt eine Anpassung der für die Bilderfassung verwendeten Parameter an die Anforderungen des zweiten Mikroskops 9. So kann beispielsweise eine Anpassung bei einem Vergleich eines Laser-Scan-Mikroskops mit einem Weitfeldmikroskop oder eines hochauflösenden SR-Mikroskops mit einem Laser-Scan-Mikroskops oder Weitfeldmikroskop erforderlich sein.

Anschließend erfolgt ein Vergleich der Ergebnisse des ersten Mikroskops 9 aus R1 mit den Ergebnissen des zweiten Mikroskops 9 aus R2 in einem Schritt V3. Die Ergebnisse aus V3 werden als Vergleichswerte zwischen beiden Mikroskopen 9 ausgegeben (R4). In dem nachfolgenden Schritt V4 erfolgt der Vergleich mit theoretischen Werten sowie die Ausgabe der Ergebnisse in R5 und die Beendigung des Verfahrens.

### Bezugszeichen

- 1: Referenzprobe
- 2: Trägerstruktur
- 3: Trägermaterial
- 4: Objektträger
- 5: erste Strukturierung / erstes Testmuster
- 5.1: Teilstruktur (der ersten Strukturierung 5)
- 5ax: axiales Testmuster
- 5.1ax: axiale Teilstruktur
- 6: zweite Strukturierung / zweites Testmuster
- 6.1: Teilstruktur (der zweiten Strukturierung 6
- 7: dritte Strukturierung / drittes Testmuster
- 7.1: Teilstruktur (der dritten Strukturierung 7)
- 8: vierte Strukturierung
- 8.1: Teilstruktur (der vierten Strukturierung 8)
- 9: Mikroskop
- 10: Auswerte- und Steuereinheit
- 11: Objektiv
- 12: Probentisch
- 13: Antriebe
- 14: fünfte Strukturierung / fünftes Testmuster
- 15: Vergleichseinheit
- 16: Matrix
- 17: maschinenlesbare Kodierung
- oA: optische Achse
- BI: Bild aus Szenario I
- B_{II1}: erstes Bild aus Szenario II
- B_{II2}: zweites Bild aus Szenario II
- Ki, Vi: Verfahrensschritte; mit i = 1 bis 7
- KEi, VEi: Entscheidungsschritte mit i = 1 bis 5
- Ri: Ergebnisschritte mit i = 1 bis 3
- S: Schnittpunkt

## Patentansprüche

1. Referenzprobe (1) für die Kalibrierung und/oder Justierung eines Mikroskops (9),
- aufweisend mindestens eine Trägerstruktur (2) aus einem Trägermaterial (3), welches zumindest in Bereichen seiner Ausdehnung zur Emission von Lumineszenzlicht anregbar ist,
wobei das Trägermaterial (3) mindestens eine hinsichtlich ihrer Abmessungen und Form vorbestimmte dreidimensionale Strukturierung (5, 6, 7, 8, 14, 17) bestehend aus einer Anzahl von Teilstrukturen (5.1, 6.1, 7.1, 8.1, 14.1) aufweist,
**dadurch gekennzeichnet, dass**
- das Trägermaterial (3) Diamant oder Silizium-Carbid ist;
- das Trägermaterial (3) in den Bereichen oder um die Bereiche der dreidimensionalen Strukturierung (5, 6, 7, 8, 14, 17) dotiert ist, um zur Emission des Lumineszenzlichts anregbar zu sein; und
- die jeweilige Teilstruktur (5.1, 5.1ax, 6.1, 7.1, 8.1, 14.1) lateral und/oder axial als eine Fläche, als Punkte, als eine dreidimensionale Struktur oder als eine Kombination mindestens zweier Linienabschnitte ausgebildet ist, wobei sich eine laterale Teilstruktur (5.1, 6.1, 7.1, 8.1) auf oder unter einer Oberfläche der Referenzprobe und im Wesentlichen parallel zu dieser erstreckt, wobei die Teilstrukturen (5.1, 6.1, 7.1, 8.1, 14.1) axiale Teilstrukturen (5.1ax) umfassen, die sich in oder schräg zu einer z-Richtung in das Trägermaterial erstrecken und die wenigstens ein Paar sich kreuzender Linien umfassen.

2. Referenzprobe (1) nach Anspruch 1, **dadurch gekennzeichnet, dass** das Trägermaterial (3) Bereiche aufweist, in denen es mit Stickstoff-, Silizium-, Phosphor-, Sauerstoff-, Schwefel-, Zinn- und/oder Mangan-Leerstellen-Paaren dotiert ist.

3. Referenzprobe (1) nach einem der Ansprüche 1 und 2, **dadurch gekennzeichnet, dass** die lateralen Teilstrukturen (5.1, 6.1, 7.1, 8.1) einer Strukturierung (5, 6, 7, 8) Paare von Linienabschnitten mit einem jeweiligen Abstand (di) zwischen den Linienabschnitten sind, wobei sich der Abstand (di) der I inienabschnitte von Paar zu Paar schrittweise verändert.

4. Referenzprobe (1) nach Anspruch 3, **dadurch gekennzeichnet, dass** die Abstände (di) aus einem Bereich von 25 nm bis 500 nm ausgewählt sind.

5. Referenzprobe (1) nach einem der Ansprüche 1 und 2, **dadurch gekennzeichnet, dass** die lateralen Teilstrukturen (6.1) einer jeweiligen Strukturierung (6) als zur Emission von Lumineszenz anregbare Flächen ausgebildet sind.

6. Referenzprobe (1) nach Anspruch 5, **gekennzeichnet durch** eine Dicke der Teilstrukturen (6.1) in z-Richtung von gleich oder kleiner 50 nm, vorzugsweise gleich oder kleiner 25 nm.

7. Referenzprobe (1) nach einem der Ansprüche 5 und 6, **dadurch gekennzeichnet, dass** die flächigen Teilstrukturen (6.1) alternierend mit Flächen angeordnet sind, die nicht zur Emission von Lumineszenz anregbar sind.

8. Referenzprobe (1) nach einem der Ansprüche 1 bis 4, **dadurch gekennzeichnet, dass** die Teilstrukturen (6.1) als nicht zur Emission von Lumineszenz anregbare Flächen ausgebildet und in eine zur Emission von Lumineszenz anregbaren Matrix (16) eingebettet sind.

9. Referenzprobe (1) nach Anspruch 1, **dadurch gekennzeichnet, dass** eine Strukturierung (17) als eine maschinenlesbare Kodierung ausgebildet ist.

10. Verfahren zur Kalibrierung eines Mikroskops (9), umfassend die Schritte:
- des Bereitstellens der Referenzprobe (1) nach einem der Ansprüche 1 bis 9 im Strahlengang des zu kalibrierenden Mikroskops (9), wobei mindestens eine Teilstruktur (5.1, 5.1ax, 6.1, 7.1, 8.1, 14.1) einer ausgewählten Strukturierung (5, 6, 7, 8, 14) der Referenzprobe (1) in ein Objektfeld des Mikroskops (9) gebracht wird;
- Erfassen von Bilddaten der mindestens einen Teilstruktur (5.1, 5.1ax, 6.1, 7.1, 8.1, 14.1) mittels des Mikroskops (9);
- Auswerten der erfassten Bilddaten; und
- Abspeichern der Auswertungsergebnisse in einer abrufbaren Form.

11. Verfahren nach Anspruch 10, wobei das Abspeichern der Auswerteergebnisse in einer abrufbaren Form ein Speichern der Auswerteergebnisse als erste Auswerteergebnisse ist und das Verfahren die weiteren folgenden Schritte umfasst:
- Bereitstellen der Referenzprobe (1) im Strahlengang wenigstens eines zweiten Mikroskops (9), wobei mindestens eine Teilstruktur (5.1, 5.1ax, 6.1, 7.1, 8.1, 14.1) der ausgewählten Strukturierung (5, 6, 7, 8, 14) der Referenzprobe (1) in ein Objektfeld des zweiten Mikroskops (9) gebracht wird;
- Erfassen von Bilddaten mindestens einer Teilstruktur (5.1, 5.1ax, 6.1, 7.1, 8.1, 14.1) mittels des zweiten Mikroskops (9);
- Auswerten der erfassten Bilddaten und Bereitstellen der Auswertungsergebnisse als zweite Auswertungsergebnisse; und
- Vergleichen wenigstens der ersten und zweiten Auswertungsergebnisse miteinander.

12. Verfahren nach Anspruch 11, **dadurch gekennzeichnet, dass** die ersten und/oder die zweiten Auswertungsergebnisse mittels einer Vergleichseinheit (15) mit Erwartungswerten verglichen werden.

## Claims

1. Reference sample (1) for calibrating and/or adjusting a microscope (9),
- having at least one carrier structure (2) made of a carrier material (3) which, at least in regions of its extent, is excitable to emit luminescence light,
wherein the carrier material (3) has at least one three-dimensional structure (5, 6, 7, 8, 14, 17) which is predetermined in terms of its dimensions and shape and consists of a number of substructures (5.1, 6.1, 7.1, 8.1, 14.1),
**characterized in that**
- the carrier material (3) is diamond or silicon carbide;
- the carrier material (3) is doped in or around the regions of the three-dimensional structure (5, 6, 7, 8, 14, 17) in order to be excitable to emit the luminescence light; and
- the respective substructure (5.1, 5.1ax, 6.1, 7.1, 8.1, 14.1) is formed laterally and/or axially as an area, as points, as a three-dimensional structure or as a combination of at least two line sections, wherein a lateral substructure (5.1, 6.1, 7.1, 8.1) extends on or under a surface of the reference sample and substantially parallel thereto, wherein the substructures (5.1, 6.1, 7.1, 8.1, 14.1) comprise axial substructures (5.1ax) which extend in or obliquely to a z-direction into the carrier material and which comprise at least one pair of intersecting lines.

2. Reference sample (1) according to Claim 1, **characterized in that** the carrier material (3) has regions in which it is doped with nitrogen-vacancy, silicon-vacancy, phosphorus-vacancy, oxygen-vacancy, sulphur-vacancy, tin-vacancy and/or manganese-vacancy pairs.

3. Reference sample (1) according to either of Claims 1 and 2, **characterized in that** the lateral substructures (5.1, 6.1, 7.1, 8.1) of a structure (5, 6, 7, 8) are pairs of line sections with a respective distance (di) between the line sections, wherein the distance (di) between the line sections changes step by step from pair to pair.

4. Reference sample (1) according to Claim 3, **characterized in that** the distances (di) are selected from a range from 25 nm to 500 nm.

5. Reference sample (1) according to either of Claims 1 and 2, **characterized in that** the lateral substructures (6.1) of a respective structure (6) are formed as areas which are excitable to emit luminescence.

6. Reference sample (1) according to Claim 5, **characterized by** a thickness of the substructures (6.1) in the z-direction of less than or equal to 50 nm, preferably less than or equal to 25 nm.

7. Reference sample (1) according to either of Claims 5 and 6, **characterized in that** the two-dimensional substructures (6.1) are arranged in alternation with areas which are not excitable to emit luminescence.

8. Reference sample (1) according to any of Claims 1 to 4, **characterized in that** the substructures (6.1) are formed as areas which are not excitable to emit luminescence and are embedded in a matrix (16) which is excitable to emit luminescence.

9. Reference sample (1) according to Claim 1, **characterized in that** a structure (17) is formed as a machine-readable code.

10. Method for calibrating a microscope (9), comprising the steps of:
- providing the reference sample (1) according to any of Claims 1 to 9 in the beam path of the microscope (9) to be calibrated, wherein at least one substructure (5.1, 5.1ax, 6.1, 7.1, 8.1, 14.1) of a selected structure (5, 6, 7, 8, 14) of the reference sample (1) is brought into an object field of the microscope (9);
- acquiring image data of the at least one substructure (5.1, 5.1ax, 6.1, 7.1, 8.1, 14.1) by means of the microscope (9);
- evaluating the acquired image data; and
- storing the evaluation results in a retrievable form.

11. Method according to Claim 10, wherein storing the evaluation results in a retrievable form is storing the evaluation results as first evaluation results and the method comprises the further following steps:
- providing the reference sample (1) in the beam path of at least a second microscope (9), wherein at least one substructure (5.1, 5.1ax, 6.1, 7.1, 8.1, 14.1) of the selected structure (5, 6, 7, 8, 14) of the reference sample (1) is brought into an object field of the second microscope (9);
- acquiring image data of at least one substructure (5.1, 5.1ax, 6.1, 7.1, 8.1, 14.1) by means of the second microscope (9);
- evaluating the acquired image data and providing the evaluation results as second evaluation results; and
- comparing at least the first and second evaluation results with each other.

12. Method according to Claim 11, **characterized in that** the first and/or the second evaluation results are compared with expected values by means of a comparison unit (15).

## Revendications

1. Échantillon de référence (1) pour l'étalonnage et/ou l'ajustement d'un microscope (9),
- présentant au moins une structure de support (2) en un matériau de support (3), qui est excitable au moins dans des zones de son extension pour l'émission de lumière luminescente,
le matériau de support (3) présentant au moins une structuration tridimensionnelle (5, 6, 7, 8, 14, 17) prédéterminée quant à ses dimensions et sa forme, constituée d'un nombre de structures partielles (5.1, 6.1, 7.1, 8.1, 14.1),
**caractérisé en ce que**
- le matériau de support (3) est du diamant ou du carbure de silicium ;
- le matériau de support (3) est dopé dans les zones ou autour des zones de la structuration tridimensionnelle (5, 6, 7, 8, 14, 17) afin d'être excitable pour l'émission de la lumière luminescente ; et
- la structure partielle respective (5.1, 5.1ax, 6.1, 7.1, 8.1, 14.1) est réalisée latéralement et/ou axialement sous la forme d'une surface, sous la forme de points, sous la forme d'une structure tridimensionnelle ou sous la forme d'une combinaison d'au moins deux sections de lignes, une structure partielle latérale (5.1, 6.1, 7.1, 8.1) s'étendant sur ou sous une surface de l'échantillon de référence et essentiellement parallèlement à celle-ci, les structures partielles (5.1, 6.1, 7.1, 8.1, 14.1) comprenant des structures partielles axiales (5.1ax) qui s'étendent dans le matériau de support dans une direction z ou obliquement par rapport à celle-ci et qui comprennent au moins une paire de lignes qui se croisent.

2. Échantillon de référence (1) selon la revendication 1, **caractérisé en ce que** le matériau de support (3) présente des zones dans lesquelles il est dopé avec des paires de sites vides d'azote, de silicium, de phosphore, d'oxygène, de soufre, d'étain et/ou de manganèse.

3. Échantillon de référence (1) selon l'une quelconque des revendications 1 et 2, **caractérisé en ce que** les structures partielles latérales (5.1, 6.1, 7.1, 8.1) d'une structuration (5, 6, 7, 8) sont des paires de sections de lignes avec une distance respective (di) entre les sections de lignes, la distance (di) des sections de lignes variant pas à pas de paire en paire.

4. Échantillon de référence (1) selon la revendication 3, **caractérisé en ce que** les distances (di) sont choisies dans une plage de 25 nm à 500 nm.

5. Échantillon de référence (1) selon l'une quelconque des revendications 1 et 2, **caractérisé en ce que** les structures partielles latérales (6.1) d'une structuration respective (6) sont réalisées sous forme de surfaces excitables pour l'émission de luminescence.

6. Échantillon de référence (1) selon la revendication 5, **caractérisé par** une épaisseur des structures partielles (6.1) dans la direction z égale ou inférieure à 50 nm, de préférence égale ou inférieure à 25 nm.

7. Échantillon de référence (1) selon l'une quelconque des revendications 5 et 6, **caractérisé en ce que** les structures partielles planes (6.1) sont agencées en alternance avec des surfaces qui ne sont pas excitables pour l'émission de luminescence.

8. Échantillon de référence (1) selon l'une quelconque des revendications 1 à 4, **caractérisé en ce que** les structures partielles (6.1) sont réalisées sous forme de surfaces non excitables pour l'émission de luminescence et sont noyées dans une matrice (16) excitable pour l'émission de luminescence.

9. Échantillon de référence (1) selon la revendication 1, **caractérisé en ce qu'**une structuration (17) est réalisée sous la forme d'un codage lisible par machine.

10. Procédé d'étalonnage d'un microscope (9), comprenant les étapes suivantes :
- la fourniture de l'échantillon de référence (1) selon l'une quelconque des revendications 1 à 9 dans le trajet de faisceau du microscope (9) à étalonner, au moins une structure partielle (5.1, 5.1ax, 6.1, 7.1, 8.1, 14.1) d'une structuration sélectionnée (5, 6, 7, 8, 14) de l'échantillon de référence (1) étant amenée dans un champ objet du microscope (9) ;
- l'acquisition de données d'image de l'au moins une structure partielle (5.1, 5.1ax, 6.1, 7.1, 8.1, 14.1) au moyen du microscope (9) ;
- l'évaluation des données d'image acquises ; et
- le stockage des résultats d'évaluation sous une forme consultable.

11. Procédé selon la revendication 10, dans lequel le stockage des résultats d'évaluation sous une forme consultable est un stockage des résultats d'évaluation en tant que premiers résultats d'évaluation et le procédé comprend les étapes supplémentaires suivantes :
- la fourniture de l'échantillon de référence (1) dans le trajet de faisceau d'au moins un deuxième microscope (9), au moins une structure partielle (5.1, 5.1ax, 6.1, 7.1, 8.1, 14.1) de la structuration sélectionnée (5, 6, 7, 8, 14) de l'échantillon de référence (1) étant amenée dans un champ objet du deuxième microscope (9) ;
- l'acquisition de données d'image d'au moins une structure partielle (5.1, 5.1ax, 6.1, 7.1, 8.1, 14.1) au moyen du deuxième microscope (9) ;
- l'évaluation des données d'image acquises et la fourniture des résultats d'évaluation en tant que deuxièmes résultats d'évaluation ; et
- la comparaison d'au moins les premiers et deuxièmes résultats d'évaluation entre eux.

12. Procédé selon la revendication 11, **caractérisé en ce que** les premiers et/ou les deuxièmes résultats d'évaluation sont comparés à des valeurs attendues au moyen d'une unité de comparaison (15).
